# EUROPEAN PATENT APPLICATION

(11) **EP 4 393 678 A1**
(43) Date of publication of application: **03.07.2024**
(21) Application number: 21957286.4
(22) Date of filing: 05.11.2021
(51) Int. Cl.: B29C 48/25, B29C 48/30

(54) **RUBBER COMPOSITE EXTRUDER HEAD LOCKING DEVICE, EXTRUDER HEAD, AND METHOD**

(30) Priority: 18.09.2021 CN 202111096930; 18.09.2021 CN 202122278023 U
(71) Applicant: Guilin Rubber Industry R&D Institute Co., Ltd., Guilin, Guangxi 541004 (CN)
(72) Inventor: CHEN, Yilin, Guilin, Guangxi 541004 (CN); DENG, Wenzhong, Guilin, Guangxi 541004 (CN); LI, Ruiying, Guilin, Guangxi 541004 (CN); OU, Anlin, Guilin, Guangxi 541004 (CN)
(74) Representative: Grünecker Patent- und Rechtsanwälte PartG mbB
(86) International application number: PCT/CN2021/128880
(87) International publication number: WO 2023/040021

(57) **Abstract**

The present invention provides a locking device for a rubber composite extruder head, an extruder head and a method, which belongs to the field of extrusion equipment. The locking device for the rubber composite extruder head includes a lock door, a connecting seat, a connecting plate and a mobile unit; the lock door is provided with a through hole, the connecting seat is arranged in the through hole, and the mobile unit is installed in an inner cavity of the connecting seat; the connecting plate is located outside the lock door, both ends are connected with the lock door respectively, and the mobile unit is connected with the connecting plate; the mobile unit drives the lock door through the connecting plate to move reciprocally. The locking structure of the present invention is simple and good in processing and assembly performance, and the locking efficiency of the die bodies is improved. The locking devices are symmetrically installed on two side surfaces of the extruder head, which clears the space for connecting the extruder head and the extruder at the rear of the extruder head, and can also be configured with a special extrusion device to achieve strong expansion adaptability.

## Description

### Technical Field

The present invention belongs to the technical field of extrusion equipment, in particular to a locking device for a rubber composite extruder head, an extruder head and a method.

### Background Art

The extruder head is mainly used to provide molding outlets for the production of extruded profiles in the rubber and plastics industry. The extruder head for the continuous production of one or more extruded profiles from one or more extruders includes a fixed die body which is immovable and at least one movable component (also known as a movable die body) arranged on a clamping pivot. The movable components move with respect to the fixed die body through the clamping pivot, so that adjacent surfaces are sealed in the working positions of the movable components and the movable components can swing and rotate to the open positions from which the operators can perform cleaning and maintenance.

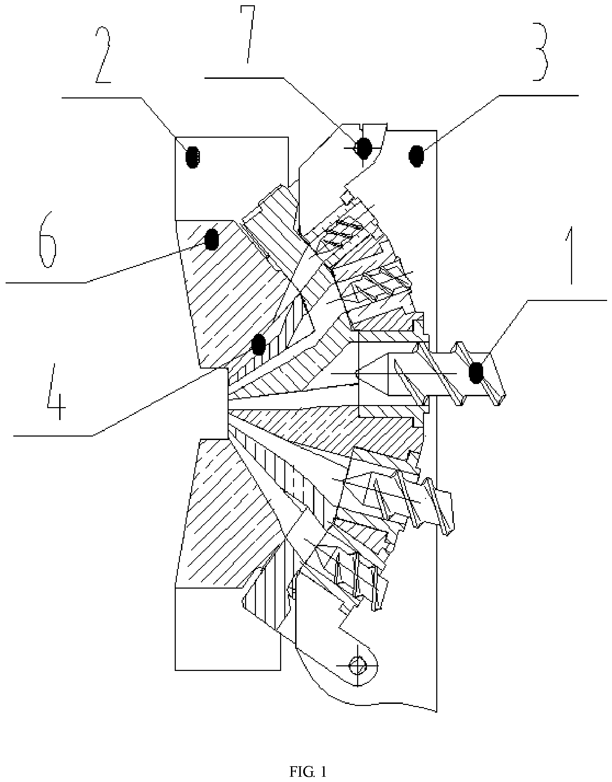

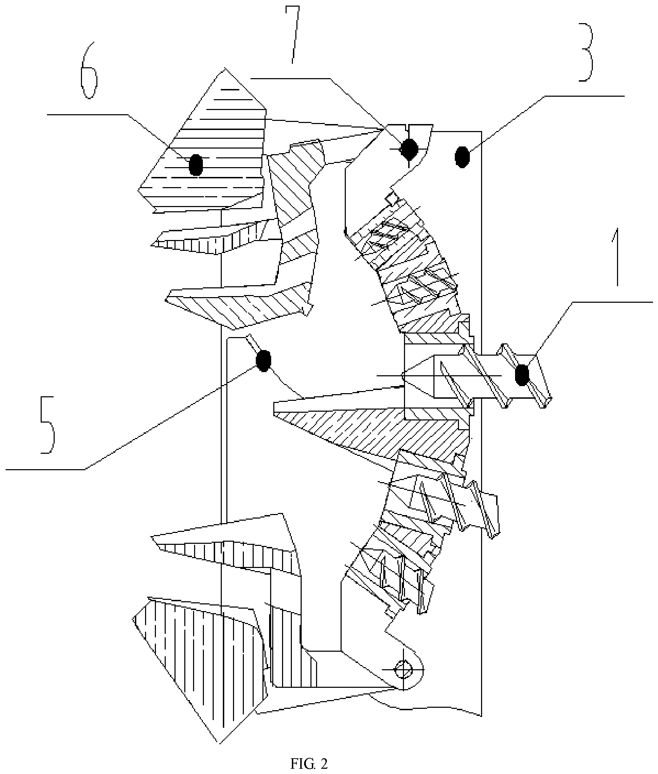

For example, in embodiments shown in Fig. 1 and Fig. 2, one or more extruders 1 are installed on the fixed die body 3 of the extruder head. The extruder head includes at least one movable die body 6 arranged on the pivot 7, and the movable die body 6 can rotate based on the pivot 7 so that the movable die body 6 and the fixed die body 3 form an adjacent sealing surface in the working positions and the movable die body 6 can swing and rotate to the open position.

General production devices for extruded profiles include at least one extruder connected to the extruder head. These devices process the input material in order to heat the material, so as to generate pressure that plasticizes the material. Thus, the material is extruded to a desired shape for extruded profiles through flow channels in the extruder head. This shape is determined by the shape of the output portion on the extruder head. Generally, the extruder head is designed to an openable structure, which is convenient to clean and maintain the flow channels, but when the extruder head is closed, that is, when it is in the working position, the extruder head must be sealed and resist the pressure of the plasticized material, so it is necessary to install a locking device on the extruder head.

However, the existing locking device on the extruder head is large in volume and complex in structure, and a large number of parts are arranged on the back of the extruder, which is inconvenient for installation and maintenance; moreover, an oil cylinder is used for direct locking, which cannot achieve mechanical self-locking, so high requirements are proposed for the hydraulic system.

### Summary of the Invention

The purpose of the present invention is to solve the problems existing in the prior art, to provide a locking device for a rubber composite extruder head, an extruder head and a method, which has simple structure and good processing and assembly performance, not only improves the locking efficiency of the die body, but also clears the space for connecting the extruder head and the extruder at the rear of the extruder head, and can also be configured with a special extrusion device to achieve strong expansion adaptability.

The present invention is realized through the following technical solution:
The first aspect of the present invention provides a locking device for a rubber composite extruder head, which includes a lock door, a connecting seat, a connecting plate and a mobile unit;
The lock door is provided with a through hole, the connecting seat is arranged in the through hole, and the mobile unit is installed in an inner cavity of the connecting seat;
The connecting plate is located outside the lock door, both ends are connected with the lock door respectively, and the mobile unit is connected with the connecting plate;
The mobile unit drives the lock door through the connecting plate to move reciprocally.

The present invention is further improved as follows: the lock door is a C-type structure, which includes an upper convex block, a body and a lower convex block successively connected into a whole;
The body is a cuboid structure, and a through hole is formed in the middle of the body;
The upper convex block and the lower convex block are located on the upper and lower ends of the through hole respectively, and located on the same side surface of the body.

The present invention is further improved as follows: a connection between the lower part of the upper convex block and the body is provided with an upper wedge inclined plane;
A connection between the upper part of the lower convex block and the body is provided with a lower wedge inclined plane;
Angles of the upper wedge inclined plane and the lower wedge inclined plane are 3°-12°.

The present invention is further improved as follows: the connecting plate is a plate-like structure parallel to the side surface of the lock door; the upper end of the connecting plate is located above the through hole of the lock door and connected with the lock door, and the lower end is located below the through hole of the lock door and connected with the lock door;
The connecting plate and the upper convex block are located on both sides of the lock door respectively.

The present invention is further improved as follows: the connecting seat is a rectangular annular structure which is open at one side;
The connecting seat is located in the through hole of the lock door, and the upper, lower, left and right outer surfaces are in contact with the inner wall of the through hole of the lock door respectively;
The lock door can move reciprocally along the upper, lower, left and right outer surfaces of the connecting seat. The present invention is further improved as follows: the mobile unit includes a piston rod and a power mechanism;
One end of the piston rod is connected with the power mechanism, and the other end is connected with the middle of the connecting plate;
The power mechanism is installed in the inner cavity of the connecting seat;
The power mechanism adopts a hydraulic cylinder, a cylinder or an electric drive mechanism.

The second aspect of the present invention provides a rubber composite extruder head, which includes a fixed die body and movable die bodies;
The above locking devices for the rubber composite extruder head are installed on both sides of the fixed die body respectively;
The unopened side of the connecting seat of one locking device is connected with the side surface of the fixed die body;
The unopened side of the connecting seat of the other locking device is connected with the other side surface of the fixed die body;
When the piston rod is extended to the longest, the upper wedge inclined plane and lower wedge inclined plane of the lock door are not in contact with the upper and lower locking surfaces of the movable die bodies respectively; and when the piston rod is retracted, the upper wedge inclined plane and the lower wedge inclined plane of the lock door are in complete contact with the upper and lower locking surfaces of the movable die bodies respectively to generate a locking force to achieve locking.

The third aspect of the present invention provides a locking method for a rubber composite extruder head, which includes: symmetrically installing the locking devices on the left and right sides of the fixed die body of the extruder head;
When the extruder head needs to be locked, pulling the lock doors in the locking devices on both sides to move inward synchronically by using the mobile units in the locking devices on both sides, so that the upper wedge inclined plane and the lower wedge inclined plane of the lock door at each side are in contact with the upper and lower locking surfaces of the outermost movable die body respectively so that each movable die body is locked;
When the extruder head needs to be opened, pulling the lock doors in the locking devices on both sides to move outward synchronically by using the mobile units in the locking devices on both sides, so that the upper wedge inclined plane and the lower wedge inclined plane of the lock door at each side are away from the upper and lower locking surfaces of the outermost movable die body respectively, until the upper wedge inclined plane and the lower wedge inclined plane are not in contact with the upper and lower locking surfaces so that each movable die body is not locked.

The present invention is further improved as follows: the method further includes:
reducing the lengths of all flow channels on the extruder head by 10%-20%.

The present invention is further improved as follows: the method further includes setting the installing angle of a thrust plate on the extruder head to 40°-55°.

Compared with the prior art, the present invention has the following beneficial effects:
The locking structure of the present invention is simple and good in processing and assembly performance, and the locking efficiency of the die bodies is improved. The locking devices are symmetrically installed on two side surfaces of the extruder head, which clears the space for connecting the extruder head and the extruder at the rear of the extruder head, and can also be configured with a special extrusion device (such as extrusion devices for rubber gear pumps, etc.) to achieve strong expansion adaptability.

### Brief Description of the Drawings

Fig. 1 is a structural schematic diagram of a rubber composite extruder head in a working state in the present invention;
Fig. 2 is a structural schematic diagram of a rubber composite extruder head after opening in the present invention;
Fig. 3 is a sectional view of a lock door when a locking device for the rubber composite extruder head of the present invention is in a working state;
Fig. 4 is a sectional view of a lock door when a locking device for the rubber composite extruder head of the present invention is in a die opening state;
Fig. 5 is a side sectional view of a lock door in a locking device for the rubber composite extruder head of the present invention;
Fig. 6 is a structural schematic diagram of a lock door in the locking device for the rubber composite extruder head of the present invention;
Fig. 7 is a structural schematic diagram of a connecting seat in a locking device for the rubber composite extruder head of the present invention; and
Fig. 8 is a schematic diagram of an installing angle of a thrust plate on the rubber composite extruder head of the present invention.

1, extruder; 2. lock door; 3, fixed die body; 4, extruder head flow channel; 5, thrust plate; 6, movable die body; 7, pivot; 8, connecting plate; 9, connecting seat; 10, mobile unit; 11, wedge inclined plane; 12, locking surface.

### Detailed Description of the Invention

The present invention is further described in detail below in conjunction with the drawings:
As shown in Fig. 1 and Fig. 2, the existing extruder head is based on the fixed die body 3 arranged in the middle, and a plurality of movable die bodies 6 are arranged in the upper and lower directions of the fixed die body 3. The upper and lower backs of the fixed die body 3 are provided with an upper and a lower pivots 7 respectively, and the upper and the lower pivots 7 are used to provide a turning basis for the movable die bodies 6. Each movable die body 6 can rotate to open and close along the pivot 7, so as to facilitate manual maintenance of the flow channel cavities of the movable die bodies 6 or cleaning of the material in the flow channel cavities. A plurality of extruders 1 are arranged on the rear of the fixed die body 3, and materials of different formulations are forced to feed into the flow channel cavity of each movable die body 6 and the fixed die body 3 through the extruders. The fixed die body 3 is arranged in the middle of each movable die body 6. In addition, a thrust plate is installed on the existing extruder head.

In order to ensure the closing force for locking of the extruder head under the working condition of composite molding, the locking devices for the rubber composite extruder head of the present invention are symmetrically installed on the left and right sides of the fixed die body 3, which are connected with the left and right side surfaces of the fixed die body 3 of the rubber composite extruder head, and symmetrically arranged. Because two side surfaces of the extruder head are provided with the locking devices respectively in the present invention, the space on the back of the extruder head (that is, the installing side of the extruder) is open, which can facilitate the configuration of various additional components and facilitate maintenance and installation.

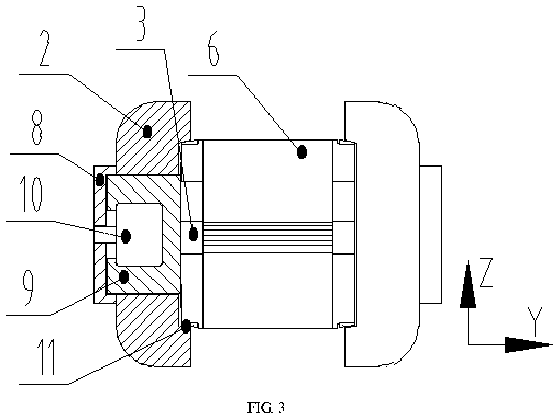

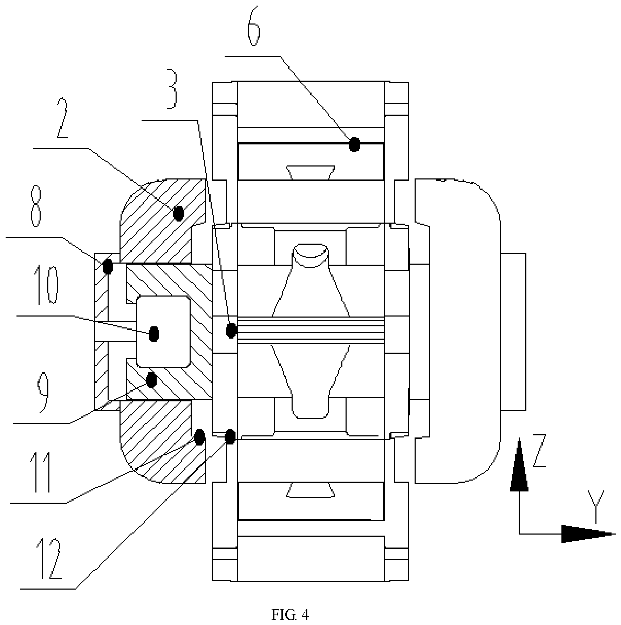

As shown in Fig. 3 to Fig. 5, the locking device for the rubber composite extruder head of the present invention includes a lock door 2, a connecting seat 9, a connecting plate 8 and a mobile unit 10. The lock door 2 is provided with a through hole, the connecting seat 9 is arranged in the through hole, and the mobile unit 10 is installed in the inner cavity of the connecting seat 9. The connecting plate is located outside the lock door, both ends are connected with the lock door respectively, and the mobile unit is connected with the connecting plate. The mobile unit can drive the lock door through the connecting plate to move reciprocally along the outer wall of the connecting seat.

During installation, one side surface of the connecting seat of one locking device is connected with the side surface of the fixed die body of the extruder head, and one side surface of the connecting seat of the other locking device is connected with the other side surface of the fixed die body of the extruder head.

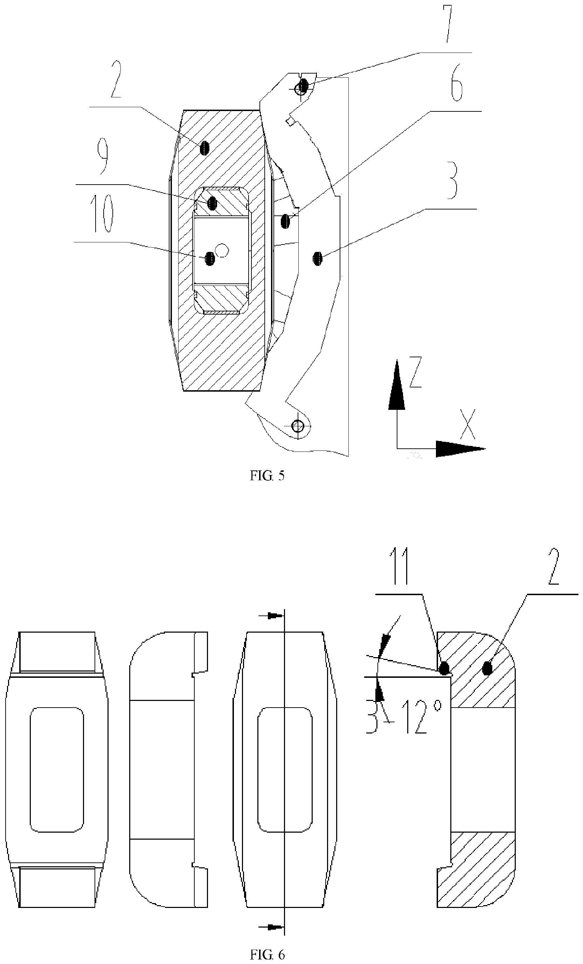

Specifically, as shown in Fig. 6, the lock door 2 is a C-type structure, which includes an upper convex block, a body and a lower convex block successively connected into a whole, wherein the body is a cuboid structure, a through hole is formed in the middle of the body and the upper convex block and the lower convex block are located on the upper and lower ends of the through hole respectively, and located on the same side surface of the body. In this way, the whole lock door 2 has light weight, compact space, small number of parts, simple structure and higher reliability. Preferably, the through hole is a rectangular hole.

Preferably, a connection between the lower part of the upper convex block and the body is provided with an upper wedge inclined plane 11; and a connection between the upper part of the lower convex block and the body is also provided with a lower wedge inclined plane. As shown in Fig. 6, from the longitudinal section of the lock door, the shapes of the upper convex block and the lower convex block are right trapezoids, and the lower bottom of the upper convex block is fixedly connected with the upper side surface of the body. The right-angle waist of the upper convex block is located in the same straight line with the top edge of the body; the oblique waist of the upper convex block forms an upper wedge inclined plane 11; the lower bottom of the lower convex block is fixedly connected with the lower side surface of the body; the right-angle waist of the lower convex block is located in the same straight line with the bottom edge of the body; and the oblique waist of the lower convex block forms a lower wedge inclined plane.

Preferably, angles of the upper wedge inclined plane and the lower wedge inclined plane are 3°-12° (the angles are calculated according to the friction coefficient of the contact surface, and the tangent function of the angle is less than the friction coefficient, which can achieve mechanical self-locking). On the YZ plane, the angle enables the lock door 2 to achieve mechanical self-locking in the case of hydraulic or electric failure, and the extruder head can still ensure the sealing and safety under the condition that the hydraulic system loses power.

Preferably, the upper and lower ends of the other side of the body not connected with the upper convex block and the lower convex block are rounded respectively, which, on the one hand, satisfies the needs of the casting process, and the stress in the position is small, which does not require so much material, thereby avoiding injury by sharp corners on the other hand.

The connecting plate 8 is a plate-like structure parallel to the side surface of the lock door, and is connected with the side surface opposite to the side surfaces of the body provided with the upper convex block and the lower convex block, that is, the connecting plate and the upper convex block (lower convex block) are located on both sides of the lock door respectively. Specifically, the upper end of the connecting plate is located above the through hole of the lock door and connected with the lock door, and the lower end of the connecting plate is located below the through hole of the lock door and connected with the lock door. The connecting plate and the lock door 2 can be connected by bolts, so that the upper end and the lower end of the connecting plate can drive the lock door 2 to move reciprocally when the connecting plate moves reciprocally.

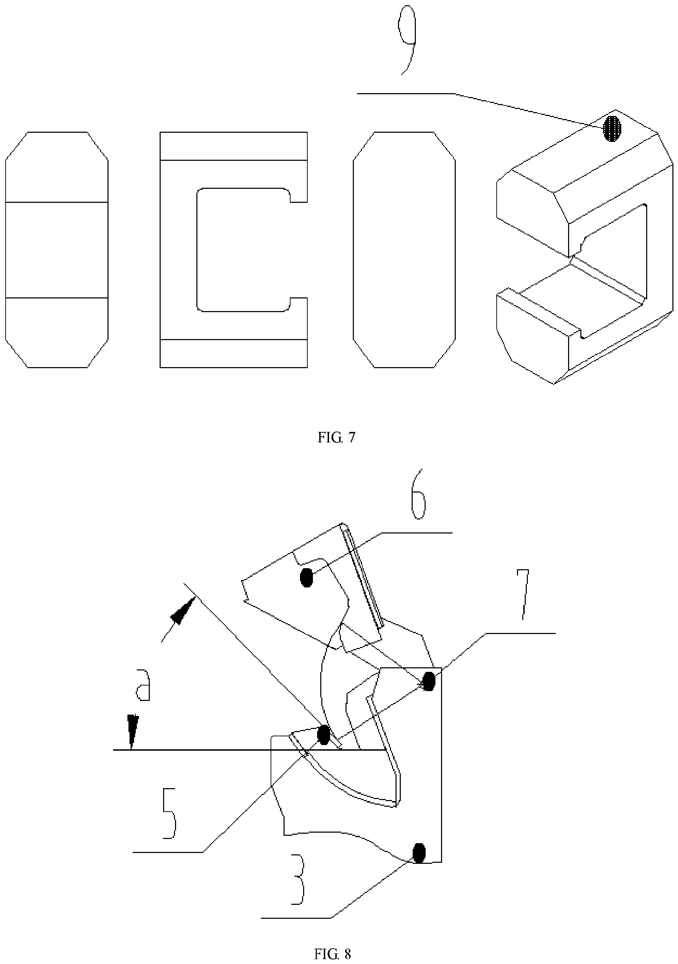

As shown in Fig. 7, the connecting seat 9 has a rectangular shape with a "C" shape as a whole, that is, a rectangular annular structure which is open at one side. The connecting seat 9 is located in the through hole of the lock door 2, and the upper, lower, left and right outer surfaces are in contact with the inner wall of the through hole of the lock door respectively. The shapes of the outer surfaces of the upper and lower sides of the connecting seat 9 are parallelograms, and the outer surfaces of the left and right sides are C-shaped surfaces. The lock door 2 is guided through four planes to ensure that the lock door 2 moves under the constraints of XY and YZ axis planes, and the inner surface of the through hole of the lock door 2 is in contact with the outer plane of the connecting seat 9 to limit the guidance to ensure that the wedge inclined plane can move and lock the extruder head along the Y axis.

Further, in order to ensure smooth relative movement between the inner wall of the through hole of the lock door and the outer wall of the connecting seat 9, a self-lubricating block can be arranged between the contact surfaces of the two.

During installation, the outer surface of the unopened side of the connecting seat 9 is fixedly connected with the side surface of the fixed die body 3, and the fixed connection mode can adopt a variety of existing connection modes, such as the fit connection form of bolts and stops.

The mobile unit 10 installed in the inner cavity of the connecting seat 9 can be configured with a hydraulic or electric drive mechanism to realize the movement of the lock door 2, and the power transmission of the mobile unit is realized by introducing a pipeline from the outside through the opening of the connecting seat 9.

Specifically, the mobile unit 10 includes a piston rod and a power mechanism. One end of the piston rod is connected with the power mechanism, and the other end is connected with the middle of the connecting plate 8. The power mechanism drives the piston rod to extend or retract, and then drives the connecting plate 8 to move away from the connecting seat 9 or close to the connecting seat 9. The connecting plate 8 simultaneously drives the lock door 2 away from the extruder head or snaps into the extruder head. The power mechanism is installed in a cavity of connecting seat 9. The power mechanism can use an existing hydraulic cylinder, a cylinder or an electric drive mechanism, as long as the piston rod can be pushed for reciprocating movement. In the embodiments shown in Figs. 3, 4 and 5, the mobile unit 10 adopts a hydraulic cylinder.

When the piston rod is extended to the longest, the distance between the connecting plate and the connecting seat is the largest. At this time, the upper wedge inclined plane and lower wedge inclined plane of the lock door are not in contact with the upper and lower locking surfaces 12 of the movable die bodies 6; and when the piston rod is retracted, the distance between the connecting plate and the connecting seat is close. At this time, the upper wedge inclined plane and the lower wedge inclined plane of the lock door are in complete contact with the upper and lower locking surfaces 12 of the movable die bodies 6 to generate a locking force to achieve locking.

Preferably, the connecting seat 9 has a fluid medium or solid thermal insulation function. Specifically, the thermal insulation function can be achieved by drilling the connecting seat 9 and injecting cooling water or installing thermal insulation material. The working temperature of the mobile unit 10 can be controlled through the thermal insulation function to ensure the stability and the reliability of the mobile unit 10 in long-term work.

The lock door 2 is connected with the mobile unit 10 through the connecting plate 8 (in the embodiment shown in Fig. 5, in the structure, the connecting plate 8 is removed), and the mobile unit 10 pulls the lock door 2 to move along the outer surface of the connecting seat 9, and finally to lock the extruder head through the wedge inclined plane 11.

The inner surface of the through hole in the lock door 2 is in contact with the outer surface of the connecting seat 9 to form the constraints of XY and YZ axis planes, thereby ensuring that the mobile units 10 symmetrically arranged on left and right sides of the fixed die body 3 drive the lock door 2 to move synchronously inward on the connecting seat 9 along the Y axis to lock the extruder head. The synchronous inward locking of the lock doors is guaranteed by the power mechanism. For example, if the power mechanism uses a hydraulic cylinder, then the synchronous inward locking of the lock doors on both sides is controlled through valve flow. If the power mechanism uses an electric drive mechanism, then the synchronous inward locking of the lock doors on both sides is controlled through motor speed. The synchronous control method can be achieved by using the existing method, which will not be repeated.

In the working process, the mobile unit 10 pulls the lock door 2 to move on the connecting seat 9. The lock door 2 moves inward from both sides synchronously, finally locks the movable die bodies 6 of the extruder head through the wedge inclined plane 11, and realizes mechanical self-locking through the wedge inclined plane 11. The closing force generated by the wedge inclined plane 11 is used to resist the pressure of the rubber material to achieve the effect of sealing the adjacent surface.

The present invention further provides a locking method for a extruder head, which includes: symmetrically installing the locking devices on the left and right sides of the fixed die body 3; pulling the lock doors in the locking devices on both sides to move inward synchronically by using the mobile units through hydraulic or electric measures, so that the upper wedge inclined plane and the lower wedge inclined plane of the lock door at each side are in contact with the upper and lower locking surfaces 12 of the outermost movable die body 6 respectively and the closing force generated by the contact between the wedge inclined plane 11 and the locking surface 12 locks each movable die body 6. When the extruder head needs to be switched to the open position, the device operation is carried out in the order opposite to the above movement, that is, the mobile unit 10 is controlled to pull the lock doors in the locking devices on both sides to move outward synchronously by the hydraulic or electric measure, so that the upper wedge inclined plane and the lower wedge inclined plane of the lock door at each side are away from the upper and lower locking surfaces 12 of the outermost movable die body 6 respectively, until the upper wedge inclined plane and the lower wedge inclined plane are not in contact with the upper and lower locking surfaces 12. At this time, the extruder head is not locked, the lock door and the movable die bodies reach a certain distance, and each movable die body can be opened.

For the existing extruder head, the locking device of the present invention can be used to realize the locking. However, because the length of the flow channels 4 of the existing extruder head is relatively long and the locking mechanical parameters of the locking device are relatively high, preferably, the method can further include:
Based on the comprehensive consideration of ensuring the bonding strength between melt composite layers and the extrusion temperature of the material, the load of the fixed doe body 3 can be reconfigured from force balance results, that is, the length of all flow channels 4 can be shortened to reduce the load. Preferably, the length of the flow channels 4 is reduced by 10%-20%. Shortening the length of the flow channels 4 not only reduces the load of the rubber material on the component, but also reduces the residence time of the rubber material, reduces the pressure and rubber temperature, and improves the yield. Moreover, after the length of all flow channels 4 is shortened, the locking mechanical parameter requirements for the locking device are also reduced, and the size of the locking device can be further reduced.

In addition, from the force analysis of the extruder head, it can be seen that the pressure exerted by the lock door 2 and the pressure exerted by the thrust plate 5 need to be balanced with the axial rubber thrust of a screw rod, the rubber thrust of the flow channel surfaces and the rubber thrust of the mouth surfaces. Therefore, preferably, the method can further include:
increasing the installing angle of the thrust plate 5 on the existing extruder head so that the force of the lock doors can be reduced under the same load condition. The thrust plate 5 is installed on the fixed die body 3. The power need can be reduced by increasing the installing angle of the thrust plate, but the movable die bodies cannot be opened if the installing angle is too large. Therefore, considering the two conditions simultaneously, a proper installing angle is selected. The installing angle of the thrust plate in the present invention is preferably 40°-55°.

The existing method of adjusting the supporting position size of the thrust plate can be adopted to realize the change of the installing angle of the thrust plate, which will not be repeated. As shown in Fig. 8, the force on the lock door is reduced by adjusting the installing angle a of the thrust plate.

After the installing angle of the thrust plate 5 is adjusted, the force of the fixed die body 3 and the lock door 2 is redistributed, so that the force of the lock door 2 is more uniform, which greatly reduces the force of the lock door and makes the locking device smaller in size and more lightweight. Moreover, after the pressure need of the lock door is reduced, the lock door at the side surface has lower requirements for the power system (such as a hydraulic system), the stress of the die bodies is less, and the locking is more reliable.

In conclusion, the present invention reduces the balance force required to lock the extruder head by shortening the flow channels and increasing the installing angle of the thrust plate, so as to reduce the size requirements for the mobile unit 10 and the rated power of the mobile unit 10. At the same time, the present invention has the advantage of small assembly area, and recues the operation area required by the locking device for the extruder head. In the case of small equipment size, the present invention reduces the investment cost, and also reduces the operation requirements and energy consumption of the operation.

It should be indicated in the explanation of the present invention that, unless otherwise specifically regulated and defined, terms such as "connected" and "connection" shall be understood in broad sense. For example, "connection" may refer to fixed connection or detachable connection or integral connection, may refer to mechanical connection or electrical connection, and may refer to direct connection or indirect connection through an intermediate medium. For those ordinary skilled in the art, the specific meanings of the above terms in the present invention may be understood according to specific conditions.

In the description of the present invention, unless otherwise specified, terms such as "upper", "lower", "left", "right", "inner", "outer", etc. indicate direction or position relationships shown based on the drawings, and are only intended to facilitate the description of the present invention and the simplification of the description rather than to indicate or imply that the indicated device or element must have a specific direction or constructed and operated in a specific direction, and therefore, shall not be understood as a limitation to the present invention. Finally, it should be noted that the above technical solution is only one embodiment of the present invention. For those skilled in the art, on the basis that the present invention discloses the application method and principle, it is easy to make various types of improvements or variations, not limited to the method described in the specific embodiment of the present invention. Therefore, the method described above is only preferred, and does not have a restrictive meaning.

## Claims

1. A locking device for a rubber composite extruder head, comprising a lock door, a connecting seat, a connecting plate and a mobile unit;
wherein the lock door is provided with a through hole, the connecting seat is arranged in the through hole, and the mobile unit is installed in an inner cavity of the connecting seat;
the connecting plate is located outside the lock door, both ends are connected with the lock door respectively, and
the mobile unit is connected with the connecting plate;
the mobile unit drives the lock door through the connecting plate to move reciprocally.

2. The locking device for the rubber composite extruder head according to claim 1, wherein the lock door is a C-type structure, which comprises an upper convex block, a body and a lower convex block successively connected into a whole;
the body is a cuboid structure, and a through hole is formed in the middle of the body;
the upper convex block and the lower convex block are located on the upper and lower ends of the through hole respectively, and located on the same side surface of the body.

3. The locking device for the rubber composite extruder head according to claim 2, wherein a connection between the lower part of the upper convex block and the body is provided with an upper wedge inclined plane;
a connection between the upper part of the lower convex block and the body is provided with a lower wedge inclined plane;
angles of the upper wedge inclined plane and the lower wedge inclined plane are 3°-12°.

4. The locking device for the rubber composite extruder head according to claim 3, wherein the connecting plate is a plate-like structure parallel to the side surface of the lock door, the upper end of the connecting plate is located above the through hole of the lock door and connected with the lock door, and the lower end is located below the through hole of the lock door and connected with the lock door;
the connecting plate and the upper convex block are located on both sides of the lock door respectively.

5. The locking device for the rubber composite extruder head according to claim 4, wherein the connecting seat is a rectangular annular structure which is open at one side;
the connecting seat is located in the through hole of the lock door, and the upper, lower, left and right outer surfaces are in contact with the inner wall of the through hole of the lock door respectively;
the lock door can move reciprocally along the upper, lower, left and right outer surfaces of the connecting seat.

6. The locking device for the rubber composite extruder head according to claim 1, wherein the mobile unit comprises a piston rod and a power mechanism;
one end of the piston rod is connected with the power mechanism, and the other end is connected with the middle of the connecting plate;
the power mechanism is installed in the inner cavity of the connecting seat;
the power mechanism adopts a hydraulic cylinder, a cylinder or an electric drive mechanism.

7. A rubber composite extruder head, comprising a fixed die body and movable die bodies;
wherein the locking devices for the rubber composite extruder head according to any one of claims 1-6 are installed on both sides of the fixed die body respectively;
an unopened side of the connecting seat of one locking device is connected with the side surface of the fixed die body;
an unopened side of the connecting seat of the other locking device is connected with the other side surface of the fixed die body;
when the piston rod is extended to the longest, the upper wedge inclined plane and lower wedge inclined plane of the lock door are not in contact with the upper and lower locking surfaces of the movable die bodies respectively; and when the piston rod is retracted, the upper wedge inclined plane and the lower wedge inclined plane of the lock door are in complete contact with the upper and lower locking surfaces of the movable die bodies respectively to generate a locking force to achieve locking.

8. A locking method for a rubber composite extruder head, comprising: symmetrically installing the locking devices according to any one of claims 1-6 on the left and right sides of the fixed die body of the extruder head;
when the extruder head needs to be locked, pulling the lock doors in the locking devices on both sides to move inward synchronically by using the mobile units in the locking devices on both sides, so that the upper wedge inclined plane and the lower wedge inclined plane of the lock door at each side are in contact with the upper and lower locking surfaces of the outermost movable die body respectively so that each movable die body is locked;
when the extruder head needs to be opened, pulling the lock doors in the locking devices on both sides to move outward synchronically by using the mobile units in the locking devices on both sides, so that the upper wedge inclined plane and the lower wedge inclined plane of the lock door at each side are away from the upper and lower locking surfaces of the outermost movable die body respectively, until the upper wedge inclined plane and the lower wedge inclined plane are not in contact with the upper and lower locking surfaces so that each movable die body is not locked.

9. The locking method for the rubber composite extruder head according to claim 8, further comprising:
reducing the lengths of all flow channels on the extruder head by 10%-20%.

10. The locking method for the rubber composite extruder head according to claim 8, wherein an installing angle of a thrust plate on the extruder head is set to 40°-55°.
